# EUROPÄISCHE PATENTSCHRIFT

(11) **EP 4 005 759 B1**
(45) Veröffentlichungstag und Bekanntmachung des Hinweises auf die Patenterteilung: **21.02.2024**
(21) Anmeldenummer: 20209732.5
(22) Anmeldetag: 25.11.2020
(51) Int. Cl.: B28B 1/00, B28B 11/12, C04B 28/02, B33Y 10/00, B33Y 70/00, B33Y 80/00, E04G 21/04

(54) **3D-DRUCKVERFAHREN ZUR HERSTELLUNG EINES GEGENSTANDS AUS BETON ODER MÖRTEL MIT EINER DURCHFÜHRUNG**
3D PRINTING METHOD FOR PRODUCING AN OBJECT FROM CONCRETE OR MORTAR WITH A FEEDTHROUGH
PROCÉDÉ D'IMPRESSION 3D DESTINÉ À LA FABRICATION D'UN OBJET EN BÉTON OU MORTIER DOTÉ D'UN PASSAGE

(43) Veröffentlichungstag der Anmeldung: 01.06.2022
(73) Patentinhaber: Saint-Gobain Weber France, 94370 Sucy en Brie (FR)
(72) Erfinder: ALTIN, Muhammed Nasuh, 52222 Stolberg (DE); KRETTEK, Lukas, 52146 Würselen (DE); STAUDACHER, Stefan, 52074 Aachen (DE); GUHL, Tim, 52134 Herzogenrath (DE)
(74) Vertreter: Feist, Florian Arno

(56) Entgegenhaltungen:
- CN-A- 106 088 610
- CN-A- 107 366 381
- FR-A1- 3 047 258
- KR-B1- 102 009 872
- US-A1- 2014 308 381

## Beschreibung

Die Erfindung betrifft ein Verfahren zur Herstellung eines Gegenstands aus Beton oder Mörtel mittels 3D-Druck.

Der 3D-Druck von Gegenständen aus Beton oder Mörtel ist an sich bekannt. Dabei wird eine Beton- oder Mörtelmasse entsprechend der Form des zu erzeugenden Gegenstands in Form von Bahnen schichtweise aufeinander aufgebracht. Aus dem zu erzeugten Rohgegenstand mit der gewünschten Form entsteht der Gegenstand durch Aushärten der Beton- oder Mörtelmasse. Lediglich beispielhaft sei auf EP1587995A2, US2015072068A1, EP3260258A1 und EP3284879A1 verwiesen.

Mittels 3D-Druck sind Gegenstände aus Beton oder Mörtel mit hoher gestalterischer Flexibilität herstellbar. Das 3D-Druckverfahren gelangt jedoch dann an seine Grenzen, wenn Gegenstände mit Durchführungen erzeugt werden sollen, wie sie beispielsweise bei Betonwänden mit Fenster- oder Türöffnungen oder Durchführungen für Kabelkanäle, Abflussrohre, Wasserleitungen oder ähnliches auftreten. Oberhalb einer solchen Durchführung können keine Bahnen der Beton- oder Mörtelmasse abgeschieden werden, weil diese im noch nicht ausgehärteten Zustand einer Stabilisierung bedarf. Die Stabilisierung wird durch die darunterliegenden Bahnen gewährleistet, welche im Falle der Durchführung nicht vorhanden sind. Beim 3D-Druck von Kunststoffgegenständen ist es in solchen Fällen üblich, eine pfeiler- oder geflechtartige Stützstruktur zu drucken, was beim 3D-Druck von Gegenständen aus Beton oder Mörtel jedoch nicht möglich ist, da solche vergleichsweise filigranen Strukturen nicht realisierbar sind.

Aus US20140308381A1 ist ein Verfahren zum 3D-Druck von Beton-Gegenständen bekannt, wobei der Druckkopf mit einem Schnittwerkzeug ausgestattet ist. Damit wird die Betonmasse bahnweise direkt nach dem Abscheiden zerteilt. So wird ein mehrere Bahnen umfassender Ausschnitt erzeugt, der nach dem Aushärten entfernt werden kann, um eine Durchführung zu erzeugen.

Aus CN106088610A ist ein Verfahren bekannt, bei dem ein Gegenstand aus Beton mittels 3D-Druck erzeugt wird und ein Bereich anschließend durch ein trennendes Fertigungsverfahren entfernt wird zur Erzeugung einer Durchführung. Aus FR3047258A1 ist ein Verfahren bekannt, bei dem ein Gegenstand aus Beton mittels 3D-Druck erzeugt wird und ein wasserlöslicher Bereich anschließend herausgelöst wird zur Erzeugung einer Durchführung.

Es besteht Bedarf an verbesserten Verfahren zum 3D-Druck von Gegenständen aus Beton oder Mörtel, die eine flexiblere Formgestaltung erlauben. Insbesondere sollen Gegenstände mit Durchführungen realisierbar sein. Der vorliegenden Erfindung liegt die Aufgabe zugrunde, ein solches Verfahren bereitzustellen.

Die Aufgabe der Erfindung wird erfindungsgemäß gelöst durch ein Verfahren gemäß dem unabhängigen Anspruch 1. Bevorzugte Ausführungen gehen aus den abhängigen Ansprüchen hervor.

Das erfindungsgemäße Verfahren zur Herstellung eines Gegenstands aus Beton oder Mörtel mittels 3D-Druck umfasst die Herstellung eines Rohgegenstands mittels herkömmlichem 3D-Druck. Dabei werden Bahnen einer Beton- oder Mörtelmasse schichtweise aufeinander aufgebracht werden, wodurch ein Rohgegenstand erzeugt wird. Anschließend wird mindestens ein Bereich des Rohgegenstands entfernt. Erfindungsgemäß wird dabei ein Teil des Bereichs vor dem Aushärten des Rohgegenstands entfernt, wobei mindestens ein Stützpfeiler verbleibt, welcher nach dem vollständigen oder teilweisen Aushärten entfernt wird.

Durch die nachträgliche Entfernung von Material nach dem eigentlichen 3D-Druck können nahezu beliebige Formen des Gegenstands realisiert werden. Insbesondere können Durchführungen erzeugt werden, wenn die Entfernung des Materials aus dem mindestens einen Bereich erst erfolgt, wenn die Beton- oder Mörtelmasse soweit ausgehärtet ist, dass der Bereich oberhalb der Durchführung keiner mechanischen Abstützung mehr bedarf. Das sind große Vorteile der vorliegenden Erfindung.

Die Beton- oder Mörtelmasse wird typischerweise mittels eines Druckkopfs aufgebracht, der eine Düse umfasst. Dieser Düse wird die Beton- oder Mörtelmasse mittels einer Pumpe über eine Zuleitung zugeführt.

Die Beton- oder Mörtelmasse enthält zumindest eine Gesteinskörnung, ein Bindemittel und Zugabewasser. Die Gesteinskörnung kann natürlichen oder synthetischen Ursprungs sein. Als Bindemittel wird bevorzugt Zement oder Kalk eingesetzt. Optional kann die Beton- oder Mörtelmasse Betonzusatzstoffe und/oder Betonzusatzmittel enthalten. Die Beton- oder Mörtelmasse ist fließfähig und kann somit durch den Druckkopf abgeschieden werden. Nach der Abscheidung beginnt die Beton- oder Mörtelmasse auszuhärten, wobei sie ihre Fließfähigkeit infolge chemischer Prozesse (insbesondere der Einlagerung des Zugabewassers als Kristallwasser: Hydratation) und Verdunstung von Zugabewasser verliert. Dabei wird der Zementleim zu Zementstein umgewandelt. Das Aushärten umfasst insbesondere zunächst das Ansteifen, anschließend das Erstarren und wiederum anschließend das Erhärten der Beton- oder Mörtelmasse. Das Ansteifen stellt die erste Phase der Hydratation dar, wobei die Beton- oder Mörtelmasse noch verarbeitet werden kann. Während der daran anschließenden Phase des Erstarrens (Abbindens) tritt eine signifikante Viskositätszunahme auf. Während der letzten Phase des Erhärtens wird die Hydratation vervollständigt.

Das vollständige Erhärten kann mehrere Monate in Anspruch nehmen. Es ist nicht notwendig, die gesamte Phase des Erhärtens abzuwarten, wenn der Rohgegenstand im nicht mehr fließfähigen Zustand weiterverarbeitet werden soll, insbesondere durch Entfernen des mindestens einen Bereichs des Rohgegenstands. Das Aushärten im Sinne der Erfindung umfasst daher insbesondere die Phasen des Ansteifens und Erstarrens, so dass der Rohgegenstand seine Fließfähigkeit verloren hat und eine hinreichende Stabilität aufweist, wobei keine unerwünschte plastische Verformung der Beton- oder Mörtelmasse, beispielsweise unter dem Einfluss der Schwerkraft, mehr auftritt.

Betonzusatzstoffe sind pulverförmige oder flüssige Zusätze, die bestimmte Eigenschaften der Beton- oder Mörtelmasse beeinflussen. Als Betonzusatzstoffe können mineralische Feinstoffe (beispielsweise Gesteinsmehl, Flugasche, Tuff, Trass und/oder Silicastaub), organische Stoffe (beispielsweise Kunstharzdispersionen, insbesondere zur Verbesserung von Verarbeitbarkeit und Haftung), Farbpigmente und/oder Fasers (insbesondere Stahl-, Glas- oder Kunststofffasern) eingesetzt werden. Betonzusatzmittel sind in Wasser gelöste oder aufgeschlämmte Mittel, die der Beton- oder Mörtelmasse beigemischt werden, um ihre Eigenschaften, beispielsweise Verarbeitbarkeit, Abbindeverhalten, Erhärten oder Dauerhaftigkeit, durch physikalische und/oder chemische Wirkungen zu verändern. Als Betonzusatzmittel können beispielsweise Betonverflüssiger, Fließmittel, Stabilisierer, Luftporenbildner, Erstarrungsbeschleuniger, Erhärtungsbeschleuniger, Erstarrungsverzögerer, Erhärtungsverzögerer und/oder Dichtungsmittel eingesetzt werden. Der Anteil an Betonzusatzmitteln beträgt bevorzugt weniger als 4 Gew.-% der Beton- oder Mörtelmasse, besonders bevorzugt höchstens 4 Gew.-%, beispielsweise von 0,2 Gew.-% bis 2 Gew.-%.

Die Düse kann als einfaches Rohr mit in Fließrichtung der Beton- oder Mörtelmasse konstantem Querschnitt ausgebildet sein, oder auch einen sich verjüngenden oder erweiternden Querschnitt aufweisen. Die Austrittsöffnung der Düse kann beliebig geformt sein, um einen im konkreten Anwendungsfall geeigneten Austrittsquerschnitt zu erreichen. Die Form der Düse, insbesondere ihrer Austrittsöffnung, ist bevorzugt an die Breite und Dicke der zu erzeugenden Bahn an Beton- oder Mörtelmasse angepasst. Die Beton- oder Mörtelmasse wird der Düse über eine Zuleitung zugeführt, welche insbesondere Rohr- und/oder Schlauchleitungen umfasst.

Während des Abscheidens einer Bahn der Beton- oder Mörtelmasse wird der Druckkopf in eine Richtung bewegt, welche im Sinne der Erfindung als Bewegungsrichtung des Druckkopfes oder Abscheiderichtung bezeichnet wird. Eine Bahn ist eine in sich zusammenhängende Schicht der Beton- oder Mörtelmasse, welche durch die Bewegung des Druckknopfes entlang der Bewegungsrichtung erzeugt wird. Die Bahn kann gerade sein oder auch jede beliebige andere Form aufweisen. Die Bahn kann auch eine geschlossene Form bilden, indem ihr Ende wieder zum Anfang zurückgeführt wird. Die Dimension einer Bahn in Abscheiderichtung wird im Sinne der Erfindung als Länge der Bahn bezeichnet. Die dazu senkrechte Dimension in der Ebene der Bahn wird als Breite der Bahn bezeichnet. Nachdem eine Bahn erzeugt wurde, wird die nächste Bahn als Schicht oberhalb dieser Bahn abgeschieden. Die Richtung, in der die Bahnen schichtweise übereinander abgeschieden werden, wird im Sinne der Erfindung als Aufwuchsrichtung bezeichnet. Der Rohgegenstand wird somit durch den 3D-Druck in Aufwuchsrichtung "von unten nach oben" schichtweise aufgebaut. Die Dimension einer Bahn in Aufwuchsrichtung (senkrecht zu Länge und Breite) wird im Sinne der Erfindung als Dicke der Bahn bezeichnet. Die summierte Dicke der Bahnen ergibt die Höhe des Gegenstands.

Die Breite und Dicke der Bahnen kann insbesondere durch die Gestaltung der Düse, die Konsistenz der Beton- oder Mörtelmasse sowie die Förderrate der Beton- oder Mörtelmasse eingestellt werden. Die Dicke und die Breite aller Bahnen sind bevorzugt gleich und konstant. Das ist vorteilhaft hinsichtlich einer schnellen und technisch einfachen Abscheidung, weil die Bahnen dann durch eine gleichmäßige Bewegung des Druckkopfes erzeugt werden können, ohne währenddessen Einstellungen an Fördergeschwindigkeit oder Düsenform vornehmen zu müssen. Die Länge aller Bahnen kann konstant sein, so dass alle Bahnen an ihrem Anfang und ihrem Ende bündig angeordnet sind. So wird ein Rohgegenstand mit konstanter Abmessung erzeugt. Es ist aber auch problemlos möglich, dass eine Bahn eine geringere Länge aufweist als die darunterliegende Bahn, so dass die darunterliegende Bahn nicht vollständig mit der Bahn bedeckt wird. So kann ein Rohgegenstand erzeugt werden, der sich insgesamt oder abschnittsweise von unten nach oben verjüngt. Die Länge, Breite und Dicke der Bahnen kann vom Fachmann den Erfordernissen des Anwendungsfalls entsprechend frei gewählt werden. Die Breite beträgt beispielsweise von 10 mm bis 500 mm, insbesondere von 20 mm bis 100 mm, die Dicke beispielsweise von 5 mm bis 100 mm, insbesondere von 10 mm bis 50 mm, was mit typischen Düsen problemlos herstellbar ist. Die maximal erreichbare Höhe des Gegenstands ist abhängig von der Konstruktion des Roboters und des Druckbettes (Druckunterlage). Die maximal erreichbare Höhe kann beispielsweise dadurch vergrößert werden, indem das Druckbett vertikal beweglich gelagert wird und während des Drucks nach unten gefahren wird.

In einer vorteilhaften Ausführung werden die Bahnen mit alternierender Abscheiderichtung aufgebracht, so dass aufeinanderfolgende Bahnen mit entgegengesetzter Bewegungsrichtung des Druckkopfes abgeschieden werden. Der Anfang einer Bahn fällt somit mit dem Ende der darunterliegenden Bahn zusammen. Das ist vorteilhaft im Hinblick auf einen zeitsparenden Aufbau des Rohgegenstands, weil der Druckknopf nicht vom Ende der Bahn zum Anfang zurückbewegt werden muss, bevor die nächste Bahn abgeschieden wird. Beim Übergang von einer Bahn auf die darüber liegende Bahn kann der Austritt der Beton- oder Mörtelmasse aus der Düse unterbrochen werden, so dass die Bahnen voneinander getrennt sind. Alternativ kann der Austritt der Beton- oder Mörtelmasse aber auch fortgesetzt werden, so dass benachbarte Bahnen nicht voneinander getrennt sind, sondern nach Art einer Kehrschleife miteinander durch Beton- oder Mörtelmasse verbunden sind. Grundsätzlich ist es natürlich auch möglich die Bahnen mit gleicher Abscheiderichtung aufzubringen. Die Ausführungen gelten für solche Bahnen, die keine geschlossenen Formen bilden und deren Anfang und Ende daher voneinander beabstandet sind. Bilden die Bahnen eine geschlossene Form, so werden bevorzugt alle Bahnen mit der gleichen Abscheiderichtung aufgebracht.

Die Abscheidung der Bahnen der Beton- oder Mörtelmasse erfolgt mittels eines Industrieroboters, der den Druckkopf bewegt. Der 3D-Druck erfolgt vorteilhafterweise automatisiert mit Hilfe von CAD-Verarbeitung, wobei einer Verarbeitungsmaschine die CAD-Daten des Rohgegenstands bereitgestellt werden und die Verarbeitungsmaschine mittels der CAD-Daten die Bahnen zur Erzeugung des Rohgegenstands abscheidet. Der Druckkopf ist besonders bevorzugt an einem Roboterarm montiert. Es können aber auch Industrieroboter eingesetzt werden, die weniger Bewegungsfreiheitsgrade aufweisen als ein Roboterarm. Die Bewegung des Druckknopfes erfolgt bevorzugt computergestützt anhand der CAD-Daten (*computer-aided design,* rechnerunterstützte Konstruktion). Die Bahnen können so mit hoher Präzision und
Geschwindigkeit und geringer Arbeitsintensität abgeschieden werden, um den Rohgegenstand zu erzeugen.

Nach der Herstellung des Rohgegenstands durch 3D-Druck wird im erfindungsgemäßen Verfahren ein Bereich dieses Rohgegenstands entfernt. Dabei wird eine durchgängige Durchführung durch den Rohgegenstand der Bahnen erzeugt. Die Durchführung kann derart durch den Gegenstand hindurchführen, dass sie rundum von Bereichen des Gegenstands umgeben ist. Die Durchführung kann aber auch direkt an eine Oberfläche angrenzen. Die Durchführung bildet dann eine Art Einschnitt oder Kerbe.

Zur Entfernung des besagten Bereichs können unterschiedliche subtraktive Fertigungsverfahren eingesetzt werden, bevorzugt trennende Fertigungsverfahren, beispielsweise Wasserstrahlschneiden oder Laserschneiden, besonders bevorzugt spanende Fertigungsverfahren wie Fräsen, Bohren, Meißeln, Feilen, Hobeln oder Schleifen. Erfindungsgemäß wird der mindestens eine Stützpfeiler durch ein trennendes Fertigungsverfahren entfernt. Die Bearbeitung erfolgt bevorzugt automatisiert, wobei das erforderliche Werkzeug bevorzugt mittels eines (weiteren) Roboters bewegt wird. Die Bewegung erfolgt dabei bevorzugt computergestützt anhand von CAD-Daten (CNC, *Computerised Numerical Control).* Alternativ ist aber auch eine manuelle Bearbeitung möglich.

Die Durchführung kann in der Breitendimension der Bahnen erzeugt werden. Dazu wird ein Abschnitt mindestens einer Bahn über ihre gesamte Breite entfernt. Der Abschnitt der Bahn wird insbesondere vollständig entfernt, das heißt über ihre gesamte Dicke und über ihre gesamte Breite. Typischerweise bilden mehrere übereinanderliegende Abschnitte mehrerer direkt übereinanderliegender Bahnen den zu entfernenden Bereich und werden entlang ihrer gesamten Breite, insbesondere vollständig, entfernt.

Die Durchführung kann alternativ auch in der Längendimension der Bahnen erzeugt werden. Dazu wird ein Abschnitt mindestens einer Bahn über ihre gesamte Länge entfernt. Der Abschnitt der Bahn wird insbesondere vollständig entfernt, das heißt über ihre gesamte Dicke und über ihre gesamte Länge. Typischerweise bilden mehrere übereinanderliegende Abschnitte mehrerer direkt übereinanderliegender Bahnen den zu entfernenden Bereich und werden entlang ihrer gesamten Länge, insbesondere vollständig, entfernt.

Die Form und Position des zu entfernenden Bereichs hängt von den Erfordernissen im Einzelfall ab, insbesondere vom Zweck der erzeugten Durchführung. Häufig werden Durchführung mit einem rechteckigen, kreisförmigen oder ovalen Querschnitt benötigt, beispielsweise als Fenster- oder Türöffnungen oder zur nachträglichen Anbringung von Kabelkanälen oder Rohrleitungen. Es sind aber Durchführungen mit beliebigen Querschnitten realisierbar.

In einer Variante (nicht beansprucht) wird der Bereich nach dem vollständigen oder teilweisen Aushärten des Rohgegenstands durch das subtraktive Fertigungsverfahren entfernt, wobei aus dem Rohgegenstand der gewünschte Gegenstand durch Materialabtrag herausgearbeitet wird. Die Fließfähigkeit der Beton- oder Mörtelmasse muss dazu derart abgenommen haben und ihre Formstabilität derart zugenommen haben, dass eine subtraktive Bearbeitung möglich wird, ohne dass der Rohgegenstand anschließend unerwünschten Umformungen ausgesetzt wäre, beispielsweise unter dem Einfluss der Schwerkraft. Es ist nicht erforderlich, dass die Phase des Erstarrens (oder gar des Erhärtens) vollständig abgeschlossen ist. Diese Variante eignet sich insbesondere zur Erzeugung von Durchführungen, die nicht an die obere Oberfläche des Rohgegenstands angrenzen, so dass ein Bereich des Rohgegenstands direkt oberhalb der Durchführung bestehen bleibt ("schwebende Struktur"). Dieser Bereich wird durch das Aushärten der Beton- oder Mörtelmasse hinreichend stabilisiert, so dass er keiner Stützung durch den darunterliegenden Bereich mehr bedarf, der daraufhin entfernt werden kann, ohne dass der oberhalb gelegene Bereich unter dem Einfluss der Schwerkraft absacken würde.

Begriffe wie "unten" und "oben", "oberhalb" und "unterhalb", "obere Oberfläche" und dergleichen beziehen sich im Sinne der Erfindung auf die Aufwuchsrichtung des Rohgegenstands, wobei eine Bahn, die später abgeschieden wurde als eine andere Bahn, sich oberhalb dieser anderen Bahn befindet.

Es ist möglich (nicht beansprucht), den Rohgegenstand vollständig mittels 3D-Druck zu erzeugen, diesen insgesamt (vollständig oder teilweise) auszuhärten und dann den Bereich zu entfernen. Da sich der 3D-Druck des Rohgegenstands je nach dessen Größe aber über mehrere Stunden erstrecken kann, ist es aber auch möglich (nicht beansprucht), den Bereich aus einem bereits ausgehärteten Abschnitt zu entfernen, wenn darüber befindliche Bahnen noch nicht ausgehärtet sind oder sogar noch gedruckt werden.

In einer weiteren Variante (nicht beansprucht) wird der Bereich vor dem Aushärten des Rohgegenstands entfernt. Die Beton- oder Mörtelmasse ist dann noch hinreichend fließfähig und leicht zu bearbeiten. Es können die bereits beschriebenen trennenden Fertigungsverfahren zum Einsatz kommen, alternativ einfaches Abstreichen oder Abheben, beispielsweise mittels eines Spachtels, einer Kelle, einer Schaufel oder eines ähnlichen Werkzeugs. Diese Variante eignet sich insbesondere zur Erzeugung von Durchführungen, die an die obere Oberfläche des Rohgegenstands angrenzen, so dass keine darüber liegenden Bereiche bestehen bleiben. Die mangelnde Aushärtung stellt in diesem Fall keinen Nachteil dar, weil keine schwebenden Strukturen erzeugt werden, die stabilisiert werden müssten.

Erfindungsgemäß ist eine Kombination der beiden Varianten, wobei die Beton- oder Mörtelmasse vor dem Aushärten im zu entfernenden Bereich entfernt wird bis auf einen oder mehrere verbleibende Stützpfeiler, welche die darüber liegenden Bereiche abstützen und welche ihrerseits erst nach dem Aushärten der Beton- oder Mörtelmasse entfernt werden.

In einer Weiterbildung der Erfindung wird eine der Oberflächen des Rohgegenstands durch Entfernung von Beton- oder Mörtelmasse geformt, insbesondere die obere Oberfläche. Es müssen dabei nicht komplette Bahnabschnitte entlang ihrer gesamten Breite entfernt werden. Stattdessen ist eine freie Bearbeitung der Oberfläche möglich, die sich nicht nach den Bahngrenzen richten muss und mittels derer beliebig geformte Oberflächen erzeugt werden können, die direkt mit dem 3D-Druck nicht zugänglich sind, insbesondere abgerundete Formen. Die Bearbeitung kann nach dem Aushärten durch trennende Fertigungsverfahren oder vor dem Aushärten erfolgen. Die vorstehenden Ausführungen zur Erzeugung der Durchführung und den dazu eingesetzten bevorzugten Verfahren gelten hierbei entsprechend.

Es kann vorteilhaft sein, schon beim 3D-Druck Maßnahmen zu ergreifen, welche die nachträgliche Entfernung des Bereichs des Rohgegenstands begünstigen. In einer vorteilhaften Ausführung wird der Beton- oder Mörtelmasse beim Erzeugen des später zu entfernenden Bereichs ein Zusatz beigefügt, der geeignet ist, den besagten Bereich mit einer verringerten Härte zu versehen. Der Zusatz kann beispielsweise ein Poren- oder Blasenbildner sein, welcher geeignet ist, Poren in der Beton- oder Mörtelmasse auszubilden und ihre Härte dadurch zu verringern. Es kann auch Druckluft als Zusatz eingeleitet werden, so dass Luftblasen in der Beton- oder Mörtelmasse eingeschlossen werden, welche wiederum Poren ausbilden. Auch andere Chemikalien sind als Zusatz denkbar, die geeignet sind, die Entfernung der Beton- oder Mörtelmasse zu erleichtern, insbesondere ihre Härte zu verringern. Auch können der Beton- oder Mörtelmasse Chemikalien beigemischt werden, welche nach dem Aushärten ausgeschwämmt werden können, um die Festigkeit zu verringern. Als Zusatz kann auch Wasser verwendet werden, was ebenfalls dazu führt, dass die Festigkeit der Beton- oder Mörtelmasse sinkt. Beim 3D-Druck der anderen Bereiche des Rohgegenstands wird der Zusatz der Beton- oder Mörtelmasse nicht zugegeben. Der Zusatz wird der Beton- oder Mörtelmasse (nur) dann beigefügt, wenn diese in dem Bereich aufgebracht wird, der später entfernt werden soll. Diese Ausführungsform eignet sich daher insbesondere zur Herstellung von Durchführungen entlang der Breitendimension der Bahnen. Dazu ist bevorzugt eine Zusatzstoff-Zuleitung an die Düse oder an die mit der Düse verbundenen Zuleitung für die Beton- oder Mörtelmasse angeschlossen, möglichst dicht an der Düse. Über die Zusatzstoff-Zuführung wird der Beton- oder Mörtelmasse der Zusatz beigefügt. Die Zusatzstoff-Zuleitung ist bevorzugt mit einem Ventil ausgestattet, um die Einleitung des Zusatzes selektiv einleiten zu können, wenn die Düse gerade den zu entfernenden Bereich aufbringt, und schnell abschalten zu können, wenn sich die Düse außerhalb des besagten Bereichs befindet.

In einer weiteren vorteilhaften Ausführung wird unter der untersten Bahn und über der obersten Bahn des zu entfernenden Bereichs jeweils eine Trennschicht angeordnet. Dabei befindet sich eine Trennschicht zwischen der untersten Bahn des zu entfernenden Bereichs und der direkt darunterliegenden Bahn sowie eine weitere Trennschicht zwischen der obersten Bahn des zu entfernenden Bereichs und der direkt darüber liegenden Bahn. Der zu entfernende Bereich wird somit unten und oben durch jeweils eine Trennschicht begrenzt. Die Länge der Trennschicht entspricht bevorzugt mindestens der Länge des zu entfernenden Bereichs, besonders bevorzugt genau der Länge des zu entfernenden Bereichs. Die Breite der Trennschicht entspricht bevorzugt mindestens der Breite des zu entfernenden Bereichs. Die Dimensionen "Länge" und "Breite" des zu entfernenden Bereichs wird dabei analog zur Länge und Breite der Bahnen verwendet. Die Trennschicht verhindert die Ausbildung einer stabilen Bindung zwischen der obersten und untersten Bahn des zu entfernenden Bereichs und den darunter und darüber liegenden Bereichen des Rohgegenstands während des Aushärtens. Dadurch wird die nachträgliche Entfernung des besagten Bereichs erleichtert. Aber auch wenn die Beton- oder Mörtelmasse vor dem Aushärten entfernt werden soll, kann eine solche Trennschicht hilfreich sein. Die Trennschicht kann beispielsweise als Kunststofffolie, als Metallfolie, als Papier-, Papp- oder Holzschicht oder als Schicht einer Seifenlösung ausgebildet sein. Es können auch Sedimentschichten oder -gesteine als Trennschicht verwendet werden.

Die erfindungsgemäß hergestellten Gegenstände aus Beton oder Mörtel können verwendet werden als Bestandteil des Mauerwerks eines Gebäudes, insbesondere als Mauerwerk-Bestandteil mit einer Durchführung, beispielsweise als Fenster- oder Türöffnung oder als Durchführung für einen Kabelkanal oder eine Rohrleitung.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Seitenansicht des 3D-Drucks eines Gegenstands aus Beton oder Mörtel während verschiedener Phasen des erfindungsgemäßen Verfahrens,
- Fig. 2: einen Querschnitt eines Rohgegenstands,
- Fig. 3: einen Querschnitt durch einen aus dem Rohgegenstand nach Figur 2 erhaltenen, erfindungsgemäß hergestellten Gegenstand,
- Fig. 4: einen Querschnitt durch einen weiteren erfindungsgemäß hergestellten Gegenstand,
- Fig. 5: einen Querschnitt durch einen weiteren erfindungsgemäß hergestellten Gegenstand,
- Fig. 6: einen Querschnitt durch eine weitere Ausgestaltung des Rohgegenstands,
- Fig. 7: eine Seitenansicht einer Ausgestaltung des Druckkopfes zum 3D-Druck des erfindungsgemäß hergestellten Gegenstands und
- Fig. 8: ein Flussdiagramm einer Ausführungsform eines Verfahrens zur Herstellung eines Gegenstands aus Beton oder Mörtel mittels 3D-Druck (nicht beansprucht).

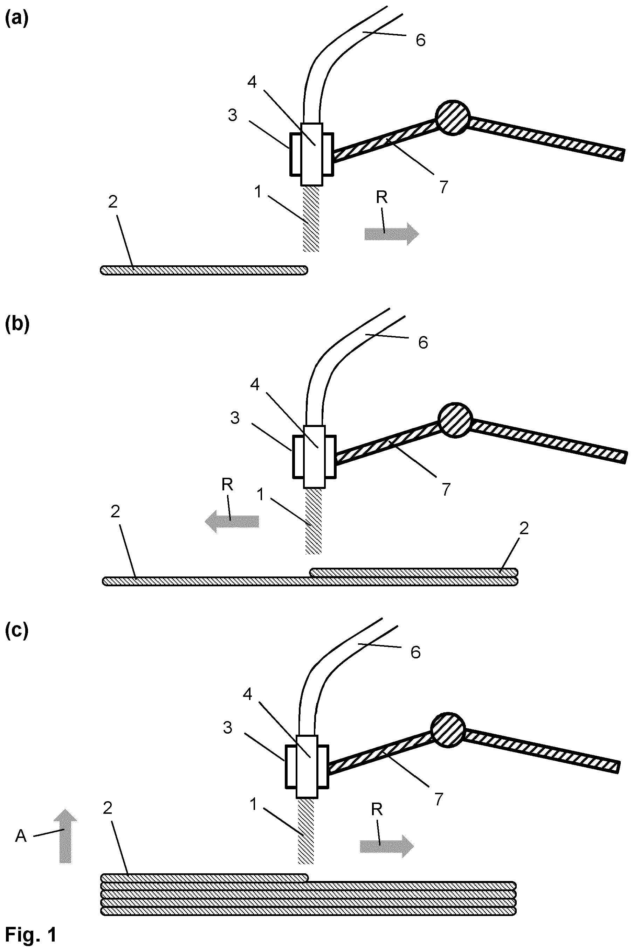

Figur 1 zeigt eine Seitenansicht des 3D-Drucks eines erfindungsgemäßen Rohgegenstands, dessen bereits erzeugten Abschnitte im Querschnitt zu sehen sind. Die Herstellung des Rohgegenstands erfolgt durch herkömmlichen 3D-Druck, wobei eine Beton- oder Mörtelmasse 1 in Form von Bahnen 2 schichtweise aufeinander gestapelt wird. Die Beton- oder Mörtelmasse 1 wird dabei mittels eines Druckkopfs 3 aufgebracht, welcher beispielsweise an einem Roboterarm 7 befestigt ist und mit dem dazugehörigen Roboter bewegt wird. Der Druckkopf 3 enthält eine Düse 4, die beispielsweise als Stahlrohr mit einer geeignet geformten Austrittsöffnung ausgebildet ist. An die Düse 4 ist eine Zuleitung 6 angeschlossen, über welche der Düse 4 mittels einer nicht dargestellten Pumpe die Beton- oder Mörtelmasse 1 zugeführt wird. Der Druckkopf 3 wird computergestützt anhand von CAD-Daten entlang der vorberechneten Form der Bahnen 2 bewegt, wobei Beton- oder Mörtelmasse 1 aus der Düse 4 austritt und die Bahnen 2 bildet. Die Bewegungsrichtung R des Druckkopfs 3 ist durch einen grauen Blockpfeil angedeutet. Die Dicke der Bahnen 2 beträgt beispielsweise 2 cm.

Figur 1a zeigt das Verfahren während der Abscheidung der ersten (untersten) Bahn 2. Auf diese wird im Anschluss eine weitere Bahn 2 abgeschieden (Figur 1b). Die Bewegungsrichtung R des Druckkopfs 3 ist bei der Abscheidung der zweiten Bahn 2 derjenigen der ersten Bahn 2 entgegengesetzt. Das Verfahren wird fortgesetzt (Figur 1c), wobei die Bahnen 2 mit alternierender Bewegungsrichtung R aufeinander gestapelt werden in der Aufwuchsrichtung A (ebenfalls durch einen grauen Blockpfeil angedeutet), bis der Rohgegenstand die gewünschte Höhe erreicht hat.

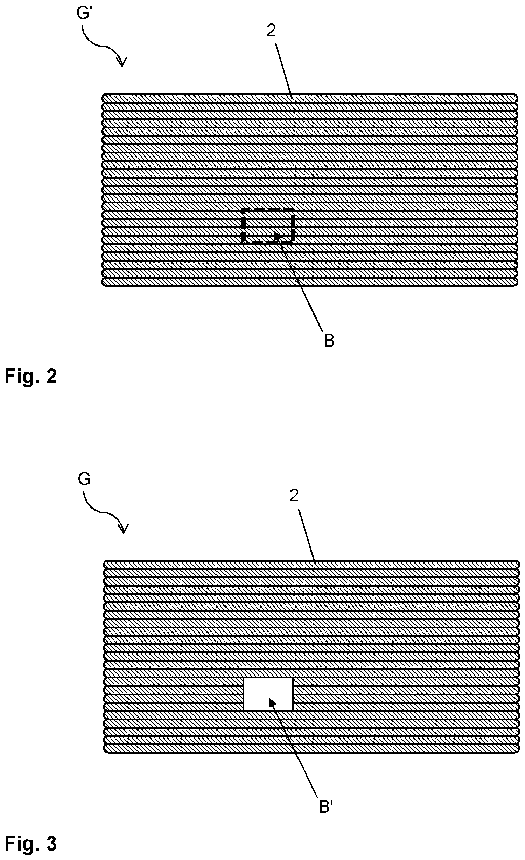

Figur 2 zeigt einen Querschnitt des fertigen Rohgegenstands G', dessen Herstellung in Figur 1 veranschaulicht ist. Der Rohgegenstand G' ist beispielsweise als Wand für ein Gebäude vorgesehen und soll im Anschluss mit einer Durchführung, beispielsweise für einen Kabelkanal, versehen werden. Daher weist der Rohgegenstands G' einen (in Seitenansicht rechteckigen, insgesamt quaderförmigen) Bereich B auf, der entfernt werden soll, um die Durchführung zu bilden. Der Bereich B enthält Abschnitte mehrerer direkt übereinanderliegender Bahnen 2, wobei diese Abschnitte bündig übereinanderliegend angeordnet sind. Die obere und untere Grenze des Bereichs B verläuft also entlang der Grenzfläche zwischen benachbarten Bahnen 2.

Der Rohgegenstand G' wird (in einer Variante, die nicht erfindungsgemäß ist) nach dem 3D-Druck ausgehärtet, wobei die Beton- oder Mörtelmasse 1 ihre Fließfähigkeit verliert und der Rohgegenstand G' stabilisiert wird. Der Bereich B des Rohgegenstands G' wird im Anschluss durch ein spanendes Verfahren wie Fräsen entfernt. Dies erfolgt ebenfalls computergestützt durch einen Roboter (CNC-Fräsen).

Erfindungsgemäß wird dagegen die Beton- oder Mörtelmasse 1 vor dem Aushärten im zu entfernenden Bereich B entfernt bis auf einen oder mehrere verbleibende Stützpfeiler, welche die darüber liegenden Bereiche abstützen und welche ihrerseits erst nach dem Aushärten der Beton- oder Mörtelmasse 1 entfernt werden.

Figur 3 zeigt den fertigen erfindungsgemäß hergestellten Gegenstand G. Der Bereich B des Rohgegenstands G' aus Figur 2 wurde entfernt, so dass der Gegenstand G nun die gewünschte durchgängige Durchführung B' aufweist.

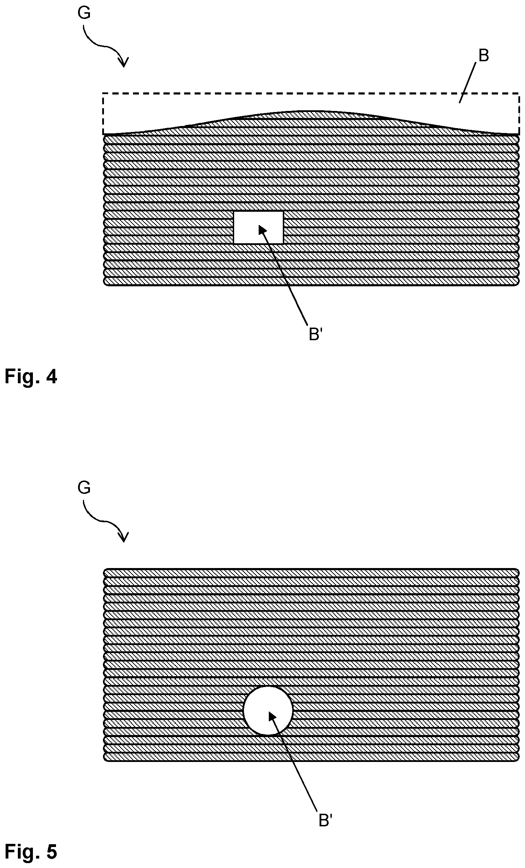

Figur 4 zeigt eine weitere Ausgestaltung des erfindungsgemäß hergestellten Gegenstands G. Auch dieser Gegenstand G weist eine Durchführung B' auf. Außerdem wurde ein an die obere Oberfläche des Rohgegenstands G' angrenzender Bereich B entfernt und dadurch eine abgerundete obere Oberfläche ausgebildet, welche durch den herkömmlichen 3D-Druck nicht direkt zugänglich ist. Auch hier ist möglich, den Rohgegenstand G' zunächst auszuhärten und den Bereich B anschließend spanend, beispielsweise durch Fräsen, zu entfernen. Da aber im Gegensatz zur Durchführung B' kein oberhalb des Bereichs B befindlicher Bereich des Gegenstands gestützt werden muss, ist es einfacher, die Beton- oder Mörtelmasse 1 vor dem Aushärten aus dem Bereich B zu entfernen, beispielsweise durch Abstreichen mit einem Spachtel.

Figur 5 zeigt eine weitere Ausgestaltung des erfindungsgemäßen Gegenstands G. Auch hier weist der Gegenstand G eine Durchführung B', die aber einen kreisförmigen Querschnitt hat im Unterschied zum rechteckigen Querschnitt der Figur 3. Sie kann beispielsweise durch Bohren erzeugt werden und für eine Rohrleitung vorgesehen sein.

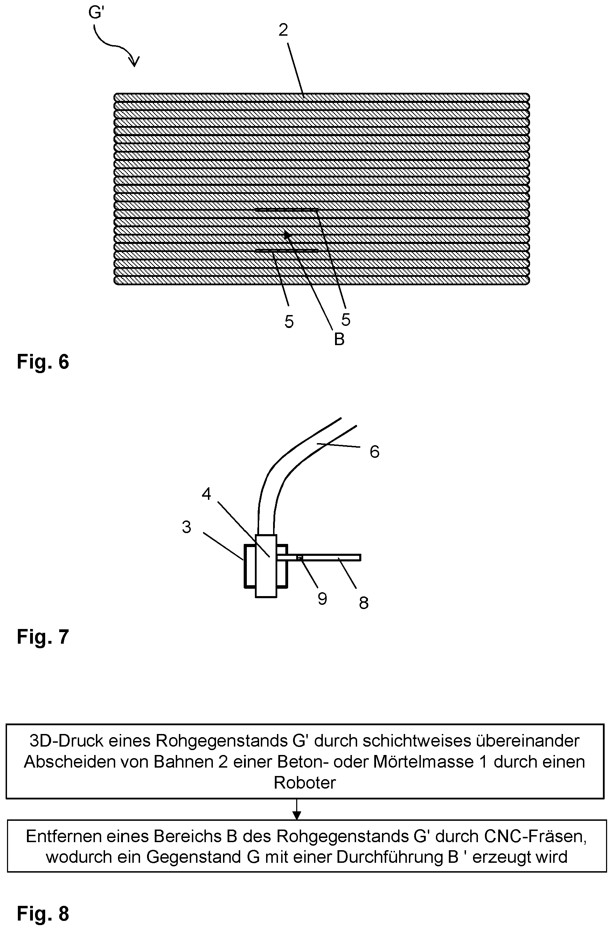

Figur 6 zeigt eine Weiterbildung des Rohgegenstands aus Figur 2. An der Untergrenze und der Obergrenze des zu entfernenden Bereichs B ist jeweils eine Trennschicht 5 zwischen benachbarte Bahnen 2 eingelegt. Die Trennschichten 5 sind beispielsweise als Kunststofffolien ausgebildet und verhindern die Ausbildung einer Bindung zwischen den Bahnen 2 während des Aushärtens. Sie erleichtern so die nachträgliche Entfernung des Bereichs B. Die Trennschichten 5 werden auf eine Bahn 2 aufgelegt, bevor die darüberliegende Bahn 2 gedruckt wird.

Figur 7 zeigt eine Weiterbildung des Druckknopfes 3 aus Figur 1. Es ist eine Zusatzstoff-Zuleitung 8 vorhanden, welche an die Düse 4 angeschlossen ist und mit einem Ventil 9 ausgestattet ist. Über die Zusatzstoff-Zuleitung 8 können der Beton- oder Mörtelmasse 1 Zusätze beigefügt werden. So können beispielsweise Porenbildner beigefügt werden, wenn der später zu entfernende Bereich B gedruckt wird, um die Härte dieses Bereichs B zu verringern und so seine Entfernung zu erleichtern. Durch das Ventil 9 kann die Beimischung des Zusatzes gestartet werden, wenn der Druckkopf 3 in den Bereich B eintritt, und gestoppt werden, wenn er den Bereich B verlässt.

Figur 8 zeigt ein Ausführungsbeispiel eines Verfahrens zur Herstellung eines Gegenstands G aus Beton oder Mörtel mittels 3D-Druck anhand eines Flussdiagramms, welches als solches nicht beansprucht wird.

Erfindungsgemäß wird dagegen die Beton- oder Mörtelmasse 1 vor dem Aushärten im zu entfernenden Bereich B entfernt bis auf einen oder mehrere verbleibende Stützpfeiler, welche die darüber liegenden Bereiche abstützen und welche ihrerseits erst nach dem Aushärten der Beton- oder Mörtelmasse 1 entfernt werden.

### Bezugszeichenliste:

- (G): 3D-gedruckter Gegenstand aus Beton oder Mörtel
- (G'): Rohgegenstand
- (B): zu entfernender Bereich des Rohgegenstands G'
- (B'): Durchführung des Gegenstands G

- (1): Beton- oder Mörtelmasse
- (2): gedruckte Bahn der Beton- oder Mörtelmasse 1
- (3): Druckkopf
- (4): Düse
- (5): Trennschicht
- (6): Zuleitung
- (7): Roboterarm
- (8): Zusatzstoff-Zuleitung
- (9): Ventil der Zusatzstoff-Zuleitung 9

- (R): Bewegungsrichtung des Druckkopfes 3
- (A): Aufwuchsrichtung des Rohgegenstands G'

## Patentansprüche

1. Verfahren zur Herstellung eines Gegenstands (G) aus Beton oder Mörtel mittels 3D-Druck, wobei:
(a) Bahnen (2) einer Beton- oder Mörtelmasse (1) durch einen Industrieroboter schichtweise aufeinander aufgebracht werden, wodurch ein Rohgegenstand (G') erzeugt wird,
(b) ein Bereich (B) des Rohgegenstands (G') entfernt wird, so dass eine Durchführung (B') erzeugt wird,
**dadurch gekennzeichnet, dass** in Verfahrensschritt (b) ein Teil des Bereichs (B) vor dem Aushärten des Rohgegenstands (G') durch ein trennendes Fertigungsverfahren, durch Abstreichen oder Abheben entfernt wird, wobei mindestens ein Stützpfeiler verbleibt, welcher nach dem vollständigen oder teilweisen Aushärten durch ein trennendes Fertigungsverfahren entfernt wird.

2. Verfahren nach Anspruch 1, wobei die Beton- oder Mörtelmasse (1) mittels eines Druckkopfs (3) aufgebracht wird, der eine Düse (4) umfasst, welcher die Beton- oder Mörtelmasse (1) mittels einer Pumpe über eine Zuleitung (6) zugeführt wird.

3. Verfahren nach Anspruch 2, wobei der Druckkopf (3) in Verfahrensschritt (a) durch den Industrieroboter bewegt wird, bevorzugt mittels eines Roboterarms (7).

4. Verfahren nach einem der Ansprüche 1 bis 3, wobei in Verfahrensschritt (b) ein Abschnitt mindestens einer Bahn (2) über ihre gesamte Breite entfernt wird, bevorzugt übereinander liegende Abschnitte mehrerer direkt übereinander liegender Bahnen (2).

5. Verfahren nach einem der Ansprüche 1 bis 3, wobei in Verfahrensschritt (b) ein Abschnitt mindestens einer Bahn (2) über ihre gesamte Länge entfernt wird, bevorzugt übereinander liegende Abschnitte mehrerer direkt übereinander liegender Bahnen (2).

6. Verfahren nach einem der Ansprüche 1 bis 5, wobei der Stützpfeiler durch Fräsen, Bohren, Meißeln, Feilen, Hobeln, Schleifen, Laserschneiden oder Wasserstrahlschneiden entfernt wird.

7. Verfahren nach einem der Ansprüche 1 bis 6, wobei die Beton- oder Mörtelmasse (1) zumindest eine Gesteinskörnung, ein Bindemittel, bevorzugt Zement oder Kalk, und Zugabewasser enthält, sowie optional Betonzusatzstoffe und Betonzusatzmittel.

8. Verfahren nach einem der Ansprüche 1 bis 7, wobei der Beton- oder Mörtelmasse (1) in Verfahrensschritt (a) beim Erzeugen des später zu entfernenden Bereichs (B) ein Zusatz beigefügt wird, welcher geeignet ist, den Bereich (B) mit einer verringerten Härte zu versehen.

9. Verfahren nach Anspruch 8, wobei der Zusatz der Beton- oder Mörtelmasse (1) über eine an die Düse (4) oder die Zuleitung (6) angeschlossene Zusatzstoff-Zuführung (8) beigefügt wird.

10. Verfahren nach einem der Ansprüche 1 bis 9, wobei zwischen der untersten Bahn (2) des Bereichs (B) und der darunter liegenden Bahn (2) sowie zwischen der obersten Bahn (2) des Bereichs (B) und der darüber liegenden Bahn (2) jeweils eine Trennschicht (5) angeordnet ist, welche bevorzugt als Kunststofffolie, als Metallfolie, als Papier-, Papp- oder Holzschicht, als Sedimentschicht oder als Seifenlösung ausgebildet ist.

## Claims

1. Method for producing an article (G) made of concrete or mortar by means of 3D printing, in which:
(a) webs (2) of a concrete or mortar compound (1) are applied on top of one another in layers by an industrial robot, as a result of which a raw article (G') is produced,
(b) a region (B) of the raw article (G') is removed, so that a feedthrough (B') is produced,
**characterised in that,** in method step (b), before the curing of the raw article (G'), a portion of the region (B) is removed by a separating manufacturing process, by wiping or lifting off, at least one support pillar remaining, which is removed by a separating manufacturing process after the complete or partial curing.

2. Method according to claim 1, wherein the concrete or mortar compound (1) is applied by means of a print head (3) having a nozzle (4) to which the concrete or mortar compound (1) is supplied by means of a pump via a supply line (6).

3. Method according to claim 2, wherein the print head (3) in method step (a) is moved by the industrial robot, preferably by means of a robot arm (7).

4. Method according to any of claims 1 to 3, wherein, in method step (b), a portion of at least one web (2) is removed over its entire width, preferably portions of a plurality of webs (2) lying directly above one another.

5. Method according to any of claims 1 to 3, wherein, in method step (b), a portion of at least one web (2) is removed over its entire length, preferably portions of a plurality of webs (2) lying directly above one another.

6. Method according to any of claims 1 to 5, wherein the support pillar is removed by milling, drilling, chiseling, filing, planing, grinding, laser cutting or water jet cutting.

7. Method according to any of claims 1 to 6, wherein the concrete or mortar compound (1) contains at least one aggregate, a binder, preferably cement or lime, and mixing water, and optionally concrete additives and concrete admixtures.

8. Method according to any of claims 1 to 7, wherein, in method step (a), an additive is added to the concrete or mortar compound (1) during the production of the region (B) to be removed later, which additive is suitable for providing the region (B) with a reduced hardness.

9. The method according to claim 8, wherein the additive is added to the concrete or mortar compound (1) via an additive feed (8) connected to the nozzle (4) or to the supply line (6).

10. Method according to any of claims 1 to 9, wherein a separating layer (5) is arranged in each case between the lowermost web (2) of the region (B) and the web (2) under same, and between the uppermost web (2) of the region (B) and the web (2) above same, which separating layer is preferably designed as a plastics film, as a metal foil, as a paper, cardboard or wood layer, as a sediment layer or as a soap solution.

## Revendications

1. Procédé permettant la fabrication d'un objet (G) en béton ou en mortier au moyen d'une impression 3D, dans lequel :
(a) des bandes (2) d'une matière de béton ou de mortier (1) sont appliquées couche par couche les unes sur les autres par un robot industriel, moyennant quoi un objet brut (G') est produit,
(b) une zone (B) de l'objet brut (G') est retirée de sorte qu'une traversée (B') est produite,
**caractérisé en ce que,** dans l'étape de procédé (b), une partie de la zone (B) est retirée avant le durcissement de l'objet brut (G') par un procédé de fabrication par séparation, par raclage ou par décrochage, dans lequel au moins un pilier de soutien subsiste, lequel est retiré après le durcissement total ou partiel par un procédé de fabrication par séparation.

2. Procédé selon la revendication 1, dans lequel la matière de béton ou de mortier (1) est appliquée au moyen d'une tête d'impression (3) qui comprend une buse (4) à laquelle est amenée la matière de béton ou de mortier (1) au moyen d'une pompe par l'intermédiaire d'une conduite d'alimentation (6).

3. Procédé selon la revendication 2, dans lequel, dans l'étape de procédé (a), la tête d'impression (3) est déplacée par le robot industriel, de préférence au moyen d'un bras de robot (7).

4. Procédé selon l'une des revendications 1 à 3, dans lequel, dans l'étape de procédé (b), une section d'au moins une bande (2) est retirée sur toute sa largeur, de préférence des sections superposées de plusieurs bandes (2) directement superposées.

5. Procédé selon l'une des revendications 1 à 3, dans lequel, dans l'étape de procédé (b), une section d'au moins une bande (2) est retirée sur toute sa longueur, de préférence des sections superposées de plusieurs bandes (2) directement superposées.

6. Procédé selon l'une des revendications 1 à 5, dans lequel le pilier de soutien est retiré par fraisage, perçage, burinage, limage, rabotage, meulage, découpage au laser ou découpage au jet d'eau.

7. Procédé selon l'une des revendications 1 à 6, dans lequel la matière de béton ou de mortier (1) contient au moins un granulat, un liant, de préférence du ciment ou de la chaux, et de l'eau d'addition, ainsi que, éventuellement, des adjuvants pour béton et des additifs pour béton.

8. Procédé selon l'une des revendications 1 à 7, dans lequel, dans l'étape de procédé (a), un additif est introduit dans la matière de béton ou de mortier (1) lors de la production de la zone (B) à retirer ultérieurement, lequel additif est adapté pour doter la zone (B) d'une dureté réduite.

9. Procédé selon la revendication 8, dans lequel l'additif est introduit dans la matière de béton ou de mortier (1) par l'intermédiaire d'une amenée d'additif (8) raccordée à la buse (4) ou à la conduite d'alimentation (6).

10. Procédé selon l'une des revendications 1 à 9, dans lequel respectivement une couche de séparation (5) est disposée entre la bande (2) la plus basse de la zone (B) et la bande (2) située au-dessous, ainsi qu'entre la bande (2) la plus haute de la zone (B) et la bande (2) située au-dessus, laquelle couche de séparation est de préférence réalisée en tant que feuille en plastique, en tant que feuille métallique, en tant que couche de papier, de carton ou de bois, en tant que couche de sédiment ou en tant que solution savonneuse.
